# EUROPÄISCHE PATENTSCHRIFT

(11) **EP 1 697 274 B1**
(45) Veröffentlichungstag und Bekanntmachung des Hinweises auf die Patenterteilung: **21.11.2012**
(21) Anmeldenummer: 04803926.7
(22) Anmeldetag: 16.12.2004
(51) Int. Cl.: C08K 7/24, C04B 30/02

(54) **ANORGANISCHE BRANDSCHUTZ- UND WÄRMEDÄMMPASTE, IHRE VERWENDUNG UND DARAUS HERGESTELLTE FORMTEILE**
INORGANIC FIRE-RESISTANT AND THERMALLY INSULATING PASTE, USE THEREOF, AND SHAPED PARTS MADE THEREFROM
PATE INORGANIQUE PARE-FEU OU CALORIFUGE, SON UTILISATION, ET PIECES MOULEES PRODUITES A PARTIR DE CETTE PATE

(30) Priorität: 23.12.2003 DE 10360749
(43) Veröffentlichungstag der Anmeldung: 06.09.2006
(73) Patentinhaber: MV Engineering GmbH & Co. KG, 47829 Krefeld (DE)
(72) Erfinder: ANGENENDT, Rainer, 46509 Xanten (DE)
(74) Vertreter: Schoenen, Norbert
(86) Internationale Anmeldenummer: PCT/EP2004/014312
(87) Internationale Veröffentlichungsnummer: WO 2005/063649

(56) Entgegenhaltungen:
- DE-A1- 4 340 339
- US-A- 4 031 059
- US-B1- 6 395 855

## Beschreibung

Die Erfindung betrifft eine frei formbare aushärtbare Paste nach dem Oberbegriff des Anspruch 1.

Die Erfindung bezieht sich auf das Gebiet des Brandschutzes und der Wärmedämmung im Hochtemperaturbereich. Bisher wurden für die Wärmedämmung entweder organische Schaumstoffe, wie Polyurethane oder Polystyrole oder anorganisch-mineralische Fasermaterialien, gepresste pyrogene Kieselsäure oder geschäumte Gläser eingesetzt. Die organischen Dämmstoffe haben den Nachteil, dass sie sogar bei Zugabe brandhemmender Substanzen entflammbar sind sowie verschmoren und verbrennen können. Mineralwolle und anorganische Fasermaterialien haben den Nachteil, dass sich die eingesetzten Bindemittel bereits oberhalb einer Temperatur von 200 °C zersetzen und dadurch Fasermaterial freigesetzt wird. Dadurch werden sowohl die Wärmedämmeigenschaften wie auch die Brandschutzeigenschaften beeinträchtigt.

### Stand der Technik

Bekannte Wärmedämmstoffe in Plattenform benötigen eine Schutzschicht, zum Beispiel aus Gipskarton oder Stahl zur Aufrechterhaltung der mechanischen Stabilität bei den geforderten höheren Temperaturen. Ohne die Schutzschicht würde die Wärmedämmplatte bei der Anwendungsgrenztemperatur in sich zusammen fallen.

Ferner sind auch Brandschutzplatten, zum Beispiel aus Calcium und Silicat bekannt, die allerdings weniger zur Wärmedämmung geeignet sind und in nachteiliger Weise eine sehr hohe Dichte aufweisen.

Im Bereich der Gießerei-Industrie für den Stahlguss und den Guss von Nichteisenmetallen werden bei der Herstellung der Gießformen Sättigungstrichter (Speiser) gebildet, die mit einer formbaren Masse ausgekleidet werden. Wenn die Isolationswirkung der Speiser nicht ausreicht, werden exotherme Speisermaterialien verwendet. Diese Masse entzündet sich bei der Berührung mit dem flüssigen Gießmetall und gibt dabei Wärme an das einfließende Metall ab. Diesen Effekt macht man sich zu Nutze, um bestimmte Partien der Gussstücke länger flüssig zu halten als andere Gusspartien. Die Sättigungstrichter nennt man heutzutage "Speiser", weil ihre Aufgabe darin besteht, nach dem Vollgießen der Form das Gussstück zu "speisen", d. h., wieder Metall in das Gussstück zurückfließen zu lassen. Die Fließbewegung entsteht durch das Schrumpfen des Gießmetalls in der Gießform während des Abkühlens. Die Auskleidungen der Speiser werden heutzutage in Form fertig vorgeformter Einsätze verwendet.

Wenn nach dem Gießen und Befestigen des Gussstückes der Kernsand, aus welchem die Gussform besteht, entfernt wird, gelangt Luft an den Speisereinsatz (kurz "Speiser" genannt), welcher vorher vom Kernsand umgeben war. Wenn dieser Speiser/Speisereinsatz organische Komponenten, z. B. organische Bindemittel, enthält, beginnt der heiße Speiser zu brennen, wobei sich giftige oder zumindest äußerst unangenehme Gase und Dämpfe entwickeln. Kostengünstige, thermisch und mechanisch stabile Speisereinsätze/Speiser, die keine oder nur eine geringe Menge dieser Gase und Dämpfe abgeben, sind im Stand der Technik nicht bekannt.

In der DE 197 35 648 A1 wird ein Verfahren zur Herstellung eines anorganischen Dämmstoffes beschrieben, der möglichst bei Raumtemperatur aushärten und unter Verwendung von Aerogelen herzustellen sein soll, wobei im Wesentlichen auf den Einsatz von organischen Lösungsmitteln verzichtet wird und dessen Entflammbarkeit sehr gering ist. Dazu wird in dieser Schrift vorgeschlagen, dass oxidische Aerogele mit einer wässrigen Polysiloxanemulsion vermischt werden, wobei die Oberfläche der oxidischen Aerogele möglichst vollständig mit der wässrigen Polysiloxanemulsion benetzt und anschließend der kompakte Verbund ausgehärtet wird.

Auch dieser Wärmedämmstoff benötigt in der ausgehärteten Form, beispielsweise als Wärmedämmplatte, eine Schutzschicht zur Aufrechterhaltung der mechanischen Stabilität. Eine Verwendung einer derartigen Platte ohne eine solche Schutzschicht ist nicht möglich.

Das Aushärten erfolgt bei Raumtemperatur und drucklos durch Verdunsten des in der Mischung enthaltenen Wassers.

Bei der Herstellung einer Platte aus dieser Mischung mit einer Dicke von 2 cm muss nach Beispiel 1 die Mischung an Luft bei Raumtemperatur 5 Tage lang aushärten. Danach ist die Platte fest und kann aus der Form entfernt werden.

Nach Beispiel 2 in diesem Dokument wird die Mischung in einer 3 cm dicken Schicht um ein zu dämmendes Rohr aufgebracht. Um die Schicht wird noch eine Kunststofffolie aufgebracht. An Luft bei Raumtemperatur härtet die Schicht in 8 Tagen aus. Erst danach ist die Schicht fest und dient als Wärmedämmstoff.

Aushärtezeiten von 5 bzw. 8 Tagen für einen Wärmedämmstoff sind aber viel zu lange, als dass dieser Stoff für die Praxis geeignet wäre. Dazu kommt die in Beispiel 2 genannte umhüllende Kunststofffolie, die in der Praxis ein Verdunsten des Wassers verhindern würde. Die Angabe von 8 Tagen Aushärtezeit erscheint daher rein theoretisch als Interpolation der Angaben aus Beispiel 1. Wenn nämlich eine 2 cm dicke Platte 5 Tage zum Aushärten braucht, müsste theoretisch eine 3 cm dicke Schicht etwa 8 Tage benötigen. Aber die 3 cm dicke Schicht nach Beispiel 2 kann wegen der aufgebrachten Kunststofffolie überhaupt nicht trocknen und damit aushärten.

Wegen der viel zu langen Trocknungs- und Aushärtezeiten ist dieses Verfahren bzw. diese Mischung zur Herstellung eines anorganischen Dämmstoffes für die Praxis nicht geeignet, wo die Aushärtezeiten höchstens etwa einen Tag betragen dürfen.

Ferner handelt es sich bei der bekannten Mischung aus Aerogelen und der Polysiloxanemulsion nicht um eine frei formbare eigenstabile pastöse Masse, sondern um ein flüssiges Produkt, das eine Umhüllung während des Aushärtevorgangs benötigt.

Die DE 195 33 564 A1 entspricht dem Oberbegriff des Anspruchs 1 und beschreibt ein faserhaltiges Aerogel-Verbundmaterial. Aerogele haben eine sehr geringe Dichte aufgrund einer hohen mikroskopischen Porosität und finden deshalb Anwendung als Wärmeisolationsmaterialien. Die hohe Porosität führt auch zu einer geringen mechanischen Stabilität der Aerogele. Aufgrund der vielen mikroskopischen Poren sind Aerogele sehr hygroskopisch und werden auch zum Trocknen von Gasen und insbesondere Luft verwendet.

In diesem Dokument wird gelehrt, dass schon geringe Volumenanteile von Fasern zu einer wesentlichen mechanischen Verstärkung eines Verbundmaterials aus Aerogel-Partikeln und einem Bindemittel gegenüber einem Material führt, welches nur aus Aerogel-Partikeln und dem Bindemittel besteht.

Der Nachteil der langen Trocknungs- und Aushärtezeit im Verfahren der DE 197 35 648 A1 wird hier durch Verpressen unter erhöhter Temperatur vermieden. So wird nach Beispiel 1 ein aus einer stabilen Platte bestehender Formkörper durch Verpressen bei einer Temperatur von 160 °C und einem Druck von 20 bar während einer Zeitdauer von 9 Minuten aus einer Mischung von Aerogel, Melaminformaldehydpulverharz und Mikrocellulose hergestellt. Bei der Herstellung des Formkörpers nach Beispiel 2 wird mit einer Temperatur von 160 °C und einem Druck von 10 bis 20 bar und 10 Minuten Pressdauer gearbeitet. Anstelle eines organischen Bindemittels können aber auch anorganische Bindemittel wie z. B. Wasserglaskleber verwendet werden. Wasserglaskleber aber sind aufgrund ihrer hohen Alkalität und ihrer Sprödigkeit oft nicht als Biridemittel geeignet.

Wasserglaskleber enthalten (entgegen ihrer Bezeichnung) einen nur geringen Anteil an Wasser (2 - 10 %). Für wässrige Bindemittelsysteme mit höheren Wassergehalten können diese Verfahren nicht wirtschaftlich angewandt werden, da die Trocknung zu lange dauern würde. Da das Wasser beim Trocknen entweichen muss, ist nämlich ein beheiztes Pressen zur Trocknung nicht geeignet.

Nachteilig in diesem bekannten Verfahren und bei den daraus hergestellten Formkörpern ist neben den hohen Kosten der Aerogele zum einen das Erfordernis, die Formgebung bei erhöhter Temperatur und bei erhöhtem Druck durchzuführen. Zum anderen sind die bekannten Verbundmaterialien aufgrund ihrer makroskopischen und mikroskopischen Porosität mehr oder weniger stark hygroskopisch, so dass sie sich als Adsorptionsmaterialien für Flüssigkeiten, Dämpfe und Gase eignen. Als Brandschutzmaterial dagegen, welches auch für erhöhte Temperaturen oberhalb von 800 °C eingesetzt werden soll, sind diese Formkörper aufgrund der Abgabe giftiger Dämpfe (Melaminformaldehyd) und der Brennbarkeit nicht geeignet.

Bei Anwendungen wie z. B. in der Gießereitechnik, wo die Dämmstoffe in Sekundenbruchteilen auf Temperaturen von 800 bis 1500 °C durch ein fließendes Metall gebracht werden, entweichen auch geringe Mengen an Wasser bzw. Feuchtigkeit explosionsartig und zerstören die Form. Dies kann zu schweren Unfällen führen. In der Gießereitechnik werden daher Materialien zur Isolierung eingesetzt, die keine Möglichkeit zur Wasseraufnahme bieten. Nicht nur die Aerogele stellen hierbei ein Risiko dar, sondern auch der hier genannten Wasserglaskleber findet hier aus dem genannten Grund keine Anwendung.

Es ist in dem Dokument zwar von Anforderungen im Hinblick auf den Brandschutz sowie von der Brandklasse des Verbundmaterials die Rede, aber bei dem Verbundmaterial selber handelt es sich nicht um ein Brandschutzmaterial, das daraufhin ausgelegt ist, besonders lange sehr hohen Temperaturen widerstehen zu können. Das Verbundmaterial soll vielmehr nicht brandfördernd wirken und deshalb vorzugsweise nicht entflammbare Fasertypen und schwer entflammbare Bindemittel enthalten, wobei letztere durchaus brennbar sein können.

Eine freie Formbarkeit, also Modellierbarkeit der noch nicht ausgehärteten Mischung geht aus diesem Dokument nicht hervor.

Aus der DE 298 17 995 U1 ist schließlich ein beschichteter Glasfaserfilz und seine Herstellung bekannt. Ein Glasfaserfilz für eine akustische Deckenplatte wird mit einer flammenhemmenden, nicht brandfördernden so genannten "Paste" angestrichen, welche hohle oder massive, aus glasartigen Stoffen hergestellte Mikrokugeln enthält.

Bei dieser "Paste" handelt es sich nicht um eine frei formbare Masse für ein eigenständiges massives Formteil, sondern um einen Anstrichstoff für den Glasfaserfilz. Es ist bekannt, Mikrokugeln zur Verbesserung der Fließfähigkeit, also zur Erniedrigung der Viskosität in Dispersionsfarben und Lacken, also in Anstrichstoffen einzumischen. Dies steht aber im Widerspruch zu den Anforderungen für ein frei formbare Paste, welches eine verbesserte Eigenstabilität und nicht eine verbesserte Fließfähigkeit, die eine verminderte Stabilität bedeutet, haben sollte.

Nach der technischen Lehre dieses Dokuments sollen Flecken und Glanzunterschiede auf dem äußeren Erscheinungsbild vermieden werden. Die Faserorientierung soll ebenfalls nicht sichtbar sein. Ein biegsamer beschichteter und poröser Glasfaserfilz soll hergestellt werden, welcher zusammengerollt werden kann, ohne dass die Beschichtung beschädigt wird. Besonders wichtig ist das äußere Erscheinungsbild des beschichteten Glasfaserfilzes. Diese Forderung wird dadurch erfüllt, dass die in dem Anstrichstoff enthaltenen glasartigen Füllstoffpartikel Unebenheiten im Glasfaserfilz ausfüllen und an der Produktoberfläche eine ebene Schicht bilden. Die Ausbildung einer ebenen Schicht, wobei Unebenheiten ausgefüllt werden, ist typisch für dickflüssige Anstrichstoffe und Lacke, die nach dem Auftragen etwas verfließen und dadurch eine ebene glatte Oberfläche bilden. Dies ist offensichtlich mit den Angaben in diesem Dokument gemeint. Allerdings werden offensichtlich nicht sämtliche Unebenheiten und Poren mit dem Anstrichstoff ausgefüllt, da sonst die gewünschte Porosität entsprechend den Anforderungen an ein Akustikfilz nicht erhalten bliebe. Daraus wird deutlich, dass es sich bei der in diesem Dokument offenbarten "Paste" zwar um einen dickflüssigen, immerhin aber um einen flüssigen Anstrichstoff und nicht um eine frei modellierbare Paste zum Herstellen von Formteilen handelt.

Es handelt sich hier also nicht um die Herstellung von Formteilen aus einer Paste, sondern um Anstrichstoffe. Nachteilig ist außerdem das Erfordernis, den mit dem Pastenanstrichstoff beschichteten Glasfaserfilz bei einer erhöhten Temperatur, z. B. bei 120 bis 180 °C zu trocknen.

Ferner findet sich in diesem Dokument kein Hinweis darauf, dass das Endprodukt nicht hygroskopisch sei, wie erfindungsgemäß gefordert. Aufgrund der Porosität des beschichteten Glasfaserfilzes ist sogar zu vermuten, dass dieses Endprodukt hygroskopisch ist.

### Gegenstand der Erfindung

Gegenüber dem Stand der Technik besteht die erfindungsgemäße Aufgabe darin, eine frei formbare aushärtbare Paste entsprechend dem Oberbegriff des Anspruchs 1 zu entwickeln, die bei Raumtemperatur und ohne Anwendung von erhöhtem Druck in relativ kurzer Zeit aushärten kann, um ein nicht hygroskopisches Endprodukt zu bilden. Je nach Anforderungen sollen Bindemittel eingesetzt werden, die bei Raumtemperatur oder bei erhöhter Temperatur oder nur bei erhöhter Temperatur aushärten. Die Paste soll direkt vor Ort eingesetzt werden und dann unter Raumluft abhärten und austrocknen können. Das Abtrocknen der Paste direkt vor Ort unter Raumluft setzt voraus, dass dies bei Raumtemperatur und ohne Anwendung erhöhten Druckes erfolgt, da die erforderlichen Verpressvorrichtungen nicht immer vor Ort vorhanden sind. Die Eigenschaft des Endproduktes, keine nennenswerte Feuchtigkeit aufnehmen zu können, ist für die Anwendung z. B. in der Gießerei-Industrie wichtig.

Der Erfindung liegt außerdem die Aufgabe zugrunde, eine ab Raumtemperatur aushärtende Paste zur Verwendung als Brand- und Wärmedämmstoff herzustellen, die im ausgehärteten Zustand eine derart hohe Eigenstabilität aufweisen soll, so dass eine bei Wärmedämmplatten nach dem Stand der Technik vorgesehene Schutzschicht nicht erforderlich ist. Außerdem soll auf den Einsatz von organischen Lösungsmitteln verzichtet werden, damit eine direkte Verwendung der Paste durch den Anwender möglich ist. Die Paste soll zur Herstellung kostengünstiger Formteile sehr niedriger Dichte geeignet sein.

Diese Aufgabe wird erfindungsgemäß durch die Merkmale des Anspruchs 1 gelöst.

Die Stabilität wird bei der Paste durch einen Gehalt an Fasern erreicht. Die Faserverstärkung der erfindungsgemäßen Paste bzw. des aus der Paste hergestellten Formteils ist überraschenderweise so hoch, dass eine zusätzliche Maßnahme zur mechanischen Stabilität wie die bekannte Schutzschicht nicht mehr notwendig ist.

Erfindungsgemäß wird die Kombination der folgenden Vorteile erreicht:
1. Hohe Grünstandsfestigkeit, also eine hohe Festigkeit des Formkörpers vor dem Aushärten
2. Niedrige Rohdichte, wobei Rohdichten des ausgehärteten Materials von 100 g/l erreicht wurden
3. Hohe Wärmeisolationseigenschaft
4. Sogar bei Erhitzung auf 800 °C und sogar bis 1600 °C ist der Formkörper praktisch geruchsfrei, hat also nur minimale Emissionen.
5. In das ausgehärtete Formteil können feine komplizierte Konturen gefräst werden, ohne dass das Formteil beschädigt wird; eine problemlose Nachbearbeitung des fertigen Formteils ist also möglich.
6. Das Formteil ist nicht hygroskopisch und lässt sich daher bei sehr hohen Temperaturen, nämlich 1400 °C und mehr einsetzen, ohne dass die Gefahr besteht, dass enthaltendes Wasser explosionsartig verdampft.
7. Das Formteil zeigt eine hohe mechanische Temperaturstabilität. Es ist aufgrund der Kombination von unterschiedlichen Materialien mit unterschiedlichen Erweichungs- bzw. Schmelzpunkten auch bei hohen Temperaturen stabil. Z. B. können durch gezielte Auswahl der Mikrohohlkugeln mit unterschiedlichen Schmelzbereichen in dem gleichen Formkörper die Rissbildung bzw. Spannungsbrüche verhindert werden.
8. Die Kosten für das Formteil liegen im Vergleich zu Formteilen mit einem Gehalt an Aerogel-Partikeln erheblich niedriger. -

Bei der Wahl der Mikrohohlkugeln hat man sehr viele Möglichkeiten, diese entsprechend dem Gebrauchszweck und den gewünschten Eigenschaften des Formteils auszuwählen, und zwar hinsichtlich der Korngröße und des Ursprungs der Mikrohohlkugeln, die beispielsweise aus der Flugasche gewonnen oder synthetisch hergestellt werden können. Damit ist man sehr variabel hinsichtlich des Preises, des Gewichtes des Formteils und dessen Bearbeitbarkeit.

Die Eigenschaft des erfindungsgemäßen Endproduktes, einerseits keine nennenswerte Feuchtigkeit aufzunehmen bei gleichzeitig freier Formbarkeit und andererseits die Aushärtung bei Raumtemperatur oder je nach Anforderung bei erhöhter oder nur bei erhöhter Temperatur und unter Normaldruck in überraschender Weise in so kurzer Zeit ist von wesentlichem Vorteil, da damit das Verfahren praxistauglich ist. Dazu kommt der Kostenvorteil der erfindungsgemäß eingesetzten Mikrohohlkugeln gegenüber den relativ teuren Aerogel-Partikeln. Zudem besteht seit langem ein Bedürfnis nach einer kostengünstigen Paste zur schnellen Herstellung entsprechender auch bei sehr hohen Temperaturen wirksamer eigenstabiler Formkörper. Obwohl die eingesetzten Mikrohohlkugeln seit mindestens 1997, dem Prioritätsjahr von DE 298 17 995 U1, bekannt sind, ist eine entsprechende Brandschutzpaste oder ein entsprechender daraus hergestellter Formkörper bisher nicht bekannt geworden.

Erfindungsgemäß wurden eigenständige massive Formteile und eine zu deren Herstellung geeignete Paste entwickelt werden, wobei die Formteile sowohl im ausgehärteten Zustand als auch direkt nach der Formgebung, also als Grünling, eigenstabil sind und keine zusätzliche Schutzschicht wie z. B. ein Glasfaserfilz gemäß DE 298 17 995 U1, welches mit der Paste bestrichen wird, benötigen. Die dort ausgelobte hohe Flexibilität ist erfindungsgemäß überhaupt nicht erforderlich, da diese Eigenschaft für den fertig gestellten Formkörper nicht benötigt wird.

Vorzugsweise enthält die erfindungsgemäße Paste Mikrohohlkugeln, deren durchschnittliche Korngröße (Durchmesser) bei 5 µm bis 500 µm und vorzugsweise bei 20 µm bis 300 µm und besonders bevorzugt bei 50 µm bis 150 µm liegt. Solche Mikrohohlkugeln sind winzige Hohlkügelchen aus Silicatglas. Die Wanddicke der Hohlkügelchen beträgt nur einen Bruchteil des Gesamtdurchmessers. Vorgeschlagen wird daher also, dass mineralische Mikrohohlkugeln eingesetzt werden, die aus Glas, Keramik oder Flugasche bestehen und insbesondere ein Inertgas einschließen. Die Mikrohohlkugeln sind wesentlich verantwortlich für die Wärmedämmeigenschaften der Paste und der aus der Paste hergestellten Teile.

Besonders bevorzugt ist es, die angestrebte Anwendungsgrenztemperatur mit Hilfe einer Kombination von unterschiedlichen Mikrohohlkugeln zu erreichen, also von Mikrohohlkugeln mit unterschiedlich hoher Temperaturstabilität bzw. unterschiedlichen Schmelzpunkten bei möglichst geringer Dichte. Durch eine solche Kombination unterschiedlicher mineralischer Mikrohohlkugeln und Fasern können die aus der Paste hergestellten Dämmmaterialien sowohl eine hohe Temperaturstabilität bis etwa 1200 °C erreichen und gleichzeitig ihre hervorragenden Wärmedämmeigenschaften behalten, die insbesondere durch den weitestgehend geschlossenzelligen Verbund der Mikrohohlkugeln auch bei hohen Temperaturen gewährleistet ist. Gleichzeitig wird durch den geschlossenzelligen Verbund erreicht, dass das Endprodukt keine nennenswerte Feuchtigkeit aufnehmen kann, jedoch gegenüber Wasserdampf offen ist.

Erfindungsgemäß kann eine einheitliche Art von Fasern oder auch ein Gemisch unterschiedlicher Fasern, vorzugsweise mineralischer Fasern, eingesetzt werden, insbesondere Glasfasern, Glaswolle, Steinwolle, keramische Fasern, Kohlenstofffasern und/oder Aramidfasern. Der Einsatz von unterschiedlichen mineralischen Fasern ist ein besonderer Vorteil der erfindungsgemäßen Paste, da hierdurch eine deutlich erhöhte Stabilität der Endprodukte auch unter hoher Temperatureinwirkung erreicht wird. Außerdem ist die Rohdichte des ausgehärteten Endproduktes durch die Art und Form der Fasern maßgeblich beeinflussbar.

Schließlich wird die folgende erfindungsgemäße Zusammensetzung der Paste vorgeschlagen:

| | |
|---|---|
| Mikrohohlkugeln: | 10 - 80 Gew.-%, vorzugsweise 30 - 75 Gew.-% |
| Fasern: | 3 - 20 Gew.-% |
| Bindemittel: | 3 - 25 Gew.-% (Wirkstoff) |
| Netzmittel: | 0,01 - 1 Gew.-% |
| Entschäumer: | 0,01 - 2 Gew.-% |
| Rest: | Wasser. |

Zur Herstellung der erfindungsgemäßen Paste vermischt man Mikrohohlkugeln und Fasern mit dem Bindemittel, insbesondere einer wässrigen Polysiloxanemulsion. Dabei benetzt man erfindungsgemäß die Oberfläche der Mikrohohlkugeln und der Fasern möglichst vollständig mit dem Bindemittel.

Zur Verbesserung der Benetzung wird vorzugsweise ein Netzmittel eingesetzt. Die möglichst vollständige Benetzung wird außerdem vorteilhafterweise durch handelsübliche Entschäumer, beispielsweise Siliconöl unterstützt.

Als Bindemittel setzt man vorzugsweise ein in Wasser dispergiertes alkylmodifiziertes Polysiloxan ein. Möglich und vorteilhaft ist auch ein Alkylsiliconharzpulver als Bindemittel.

Ferner betrifft die Erfindung auch die Verwendung der genannten erfindungsgemäßen Paste zum Brandschutz und/oder zur Wärmedämmung, insbesondere als Spachtelmasse oder spritzfähiges oder streichfähiges Material zum Abdichten von Hohlräumen, zum Verspachteln von Wandflächen oder Anspritzen an Wandflächen und/oder zur Isolierung von schwer zugänglichen oder unsymmetrischen Stellen im Maschinenbau und/oder zur Wärmedämmung und Brandabschottung bei Durchführungsöffnungen in Brandschutzwänden wie Rohr- und Kabeldurchführungen. Erfindungsgemäß kann die Paste auch als frei formbares Material zur Herstellung von Formteilen, insbesondere durch das an sich bekannte Kernschieß-Verfahren, für erhöhte Anwendungsgrenztemperaturen verwendet werden. Bei diesen Verwendungen lässt man die erfindungsgemäße Paste nach der Verarbeitung und/oder Formgebung bei Temperaturen ab Raumtemperatur aushärten.

Schließlich betrifft die Erfindung auch ein Formteil nach Anspruch 9.

Die Erfindung betrifft auch ein derartiges Formteil, welches ausgebildet ist als eine Dämmschicht für erhöhte Anwendungsgrenztemperaturen, insbesondere in Plattenform für Brandschutztüren und Brandschutzwände im Hoch- und Schiffsbau, für technische Dämmung, für die selektive Dämmung von elektrischen Schaltern, Steckdosen, Lampen und dergleichen, für Einsatzgebiete mit schockartigen Temperaturänderungen, insbesondere in der Gießereitechnik, als Innenauskleidung für Hochtemperaturöfen.

Dabei ist es besonders bevorzugt, wenn das Formteil eine Dichte von 50 kg/m³ bis 500 kg/m³, insbesondere von 100 kg/m³ bis 250 kg/m³ aufweist.

Vorzugsweise sind im ausgehärteten Formteil mehr als 80 Gew.%, insbesondere etwa 90 Gew.-%, Mikrohohlkugeln enthalten.

In einer besonders vorteilhaften Ausgestaltung ist das Formteil als ein Formteil für den Metallguss, insbesondere als Speisereinsatz ausgebildet.

Die erfindungsgemäße Paste kann als Spachtelmasse, als getrocknetes Formteil, als Platte sowie als spritzfähiges Material zur Wärmedämmung und zum passiven Brandschutz eingesetzt werden. Dabei kann durch die Wahl des Bindemittels und der Trocknungstemperatur die Aushärtezeit dem Trocknungsprozess angepasst werden.

Neben den genannten Vorteilen ist es außerdem günstig, dass bei der erfindungsgemäßen Paste keine organischen Lösungsmittel verwendet werden und die Paste damit direkt vor Ort eingesetzt werden kann, wobei die Paste dann unter Raumluft abtrocknet und aushärtet. Das Aushärteverfahren erfolgt bei Normaldruck ohne Verpressung und ist bei Temperaturen unterhalb von 130 °C sehr umweltfreundlich. Es sind im Umgang mit der Paste und im fertigen Produkt keine Sicherheitsvorkehrungen notwendig. So treten bei diesen Temperaturen bei der Trocknung keine gesundheitsschädlichen Gase aus. Die Endprodukte zeichnen sich schließlich durch hervorragende brandschutztechnische Eigenschaften aus.

Bereits während der Formgebung und der Trocknung kann das erhaltene Formteil mit den unterschiedlichsten Materialien oberflächenveredelt werden. Durch die Klebefähigkeit der Paste kann hier in der Regel auf zusätzliche Klebstoffe verzichtet werden.

Ein weiterer erheblicher erfindungsgemäßer Vorteil liegt in der Gewichtsersparnis gegenüber üblichen Brandschutzplatten. Üblich sind Dichten von 400 bis 500 g/l. Mit der Erfindung dagegen werden Dichten von etwa 100 g/l bis 250 g/l, typischerweise etwa 150 g/l erreicht.

Bei Hochtemperatur bleibt der feste Verbund im Formteil erhalten. Es tritt keine Sinterung auf. Die Eigenstabilität ist sogar bei sehr hohen Anwendungsgrenztemperaturen von etwa 1300 °C gewährleistet.

### Ausführungsbeispiele der Erfindung

Im Weiteren wird die Erfindung an mehreren Beispielen erläutert.

### Beispiel 1: Anwendung bis ca. 800 °C

Es wurden 414 g Wasser mit ca. 0,5 g Netzmittel und ca. 0,8 g Entschäumer versetzt. Mittels eines Dispergierrührers wurde in diese Lösung 105 g geschnittene Glaswolle bis zur vollständigen Benetzung eingerührt. Zu dieser Mischung wurde nun ebenfalls unter starkem Rühren 225 g des Bindemittels "Ino Bond W+" (Handelsname der Firma Inomat), nämlich eine alkylinodifizierte Polysiloxandispersion zugegeben. Unter weiterem starken Rühren wurden 75 g Mikrohohlkugeln "Q-CEL 6014" (Handelsname der Firma Osthoff-Petrasch) zugegeben, die bis etwa 800 °C temperaturbeständig sind. Diese Mischung wurde nun in einen Pastenmischer überführt und weitere 180 g der Mikrohohlkugeln bei niedriger Drehzahl eingemischt. Die fertige Paste hatte einen Feststoffgehalt von ca. 48 % und eine Dichte von ca. 400 kg/m³. Nach dem Abtrocknen ergab sich eine Dichte von ca. 190 kg/m³.

### Beispielhafte Anwendungsgebiete:

Im Maschinenbau zur Isolierung von schwer zugänglichen oder unsymmetrischen Stellen,

Herstellung von Formteilen für Anwendungsgrenztemperaturen bis 800 °C, Wärmedämmung und Brandabschottung bei Rohr- oder Kabeldurchführungen in Brandschutzwänden.

### Beispiel 2: Anwendung bis 1000 °C

Es wurden 393 g Wasser mit 0,4 g Netzmittel und 0,8 g Entschäumer versetzt. Mittels eines Dispergierrührers wurden in diese Lösung 21 g Glaswolle und 48 g Steinwolle bis zur vollständigen Benetzung eingerührt. Zu dieser Mischung wurde nun ebenfalls unter starkem Rühren 242 g des Bindemittels "Ino Bond W+" zugegeben. Unter weiterem starken Rühren wurden 110 g der Mikrohohlkugeln "K1" (Handelsname der Firma Inomat) zugegeben. Diese Mischung wurde nun in einen Pastenmischer überführt und 185 g der Mikrohohlkugeln "Fillite SG" (Handelsname der Firma Omya), die bis etwa 1200 °C temperaturbeständig sind, bei niedriger Drehzahl eingemischt.

Die fertige Paste hatte einen Feststoffgehalt von ca. 50 % und eine theoretische Dichte von ca. 575 kg/m³. Nach dem Abtrocknen ergab sich eine Dichte von ca. 200 kg/m³.

An Versuchen im Kleinprüfstand nach DIN 4102 Teil 8 wurde nachgewiesen, dass auch nach einer Prüfdauer von 90 min sich an den aus der Paste hergestellten 2 cm dicken Dämmplatten eine konstante Temperaturdifferenz (1000 °C zu 250 °C) eingestellt hat.

Hieraus ergibt sich z. B., dass Brandschutzwände oder Türen, wie sie z. B. in der DIN 4102 Teil 4 oder DIN 18082 beschrieben sind, nicht mehr hauptsächlich über die Art und Dicke der Bekleidung, sondern über die Art und Dicke der Dämmplatte definiert werden können.

Dadurch sind leichtere und dünnere Konstruktionen möglich.n oder unsymmetrischen Stellen mit Temperaturbelastungen bis max. 1000 °C,

Herstellung von Formteilen für Anwendungsgrenztemperaturen bis max. 1000 °C, Isolierung und Brandabschottung bei Rohr- oder Kabeldurchführungen in Brandschutzwänden,

Brandschutztüren und Brandschutzwände, z. B. für den Hoch- und Schiffsbau.

### Beispiel 3: Anwendung bis 1200 °C

Es wurden 500 g Wasser mit 0,5 g Netzmittel und 1,0 g Entschäumer versetzt und mittels eines Dispergierrührers 150 g des Alkysiliconharzpulvers "Silres MK Pulver" (Handelsname der Firma Wacker) eingerührt. Anschließend wurde in diese Dispersion 80 g Steinwolle bis zur vollständigen Benetzung eingerührt. Unter weiterem starken Rühren wurden 75 g der Mikrohohlkugeln "MCB-2" (Handelsname der Firma Osthoff-Petrasch), die bis etwa 900 °C temperaturbeständig sind, und 100 g der Mikrohohlkugeln "Fillite SG" eingemischt. Diese Mischung wurde nun in einen Pastenmischer überführt und 130 g der Mikrohohlkugeln "Fillite SG" bei niedriger Drehzahl eingemischt.

Die fertige Paste hatte einen Feststoffgehalt von ca. 46 % und eine theoretische Dichte von ca. 600 kg/m³. Nach dem Abtrocknen ergab sich eine Dichte von ca. 300 kg/m³.

### Beispielhafte Anwendungsgebiete:

Im Maschinenbau zur Isolierung von schwer zugänglichen oder unsymmetrischen Stellen mit Temperaturbelastungen bis max. 1200 °C,

Herstellung von Formteilen für Anwendungsgrenztemperaturen bis max. 1200 °C, Isolierung und Brandabschottung bei Rohr- oder Kabeldurchführungen in Brandschutzwänden,

Brandschutztüren und Brandschutzwände, z. B. für den Hoch- und Schiffsbau, Innenauskleidung von Hochtemperaturöfen,

Brandschutzpaneele für Eisenbahnwaggons, beständig bis etwa 1200 °C.

Überraschenderweise ist zum Aushärten unter Normalbedingungen, also unter Raumtemperatur und unter Normaldruck nur ein Zeitraum von etwa einem Tag erforderlich, wie das nachfolgende erfindungsgemäße Anwendungsbeispiel für einen Brandschutz am Unterboden eines Schienenfahrzeugs zeigt.

### Beispiel 4: Anwendung bis 1300 °C bis 1400 °C

Es wurden 100 g Wasser mit 0,1 g Netzmittel und 0,2 g Entschäumer versetzt und mittels eines Dispergierrührers 119 g des "Vatramil KG 75" (alkylmodifiziertes Polysiloxan/Kaliummethylsiliconat, Handelsbezeichnung der Firma MV Engineering) eingerührt. Anschließend wurde in diese Dispersion 39 g Basaltwolle bis zur vollständigen Benetzung eingerührt. Unter weiterem starken Rühren wurden 77 g der Mikrohohlkugeln "MCB 2" (Handelsname der Firma Osthoff-Petrasch), die bis etwa 900 °C temperaturbeständig sind, eingerührt. Diese Mischung wurde nun in einen Pastenmischer überführt und 674 g der Mikrohohlkugeln "Fillite SG" bei niedriger Drehzahl eingemischt.

Die fertige Paste hatte einen Feststoffgehalt von ca. 84 % und eine theoretische Dichte von ca. 650 kg/m³. Nach dem Abtrocknen ergab sich eine Dichte von ca. 350 kg/m³.

### Beispielhafte Anwendungsgebiete:

### Gießereitechnik

### Beispiel 5:

Schienenfahrzeuge werden heute aus Aluminium hergestellt. Aluminium hat einen Erweichungspunkt von ca. 550 °C. Um die Fahrtüchtigkeit eines Zuges auch im Brandfall sicherzustellen, muss das Aluminium im Bereich der Tragkonstruktion von außen gegen hohe Temperaturen geschützt werden. Anforderungen an das Material sind die Nichtbrennbarkeit, geringes Gewicht, gute Isolierwirkung bei hohen Temperaturen und geringe Dicke. Weiterhin muss das Material hydrophob und nicht hygroskopisch, sowie einfach zu verarbeiten sein. Diese Anforderungen werden vom erfindungsgemäßen Material bereits bei einer Schichtdicke von 1,5 cm erfüllt.

Das Material wurde mittels einer Mörtelspritzmaschine über Kopf auf den Unterboden des Schienenfahrzeugs gespritzt. Nach bereits 16 Stunden (über Nacht) war die Trocknung so weit abgeschlossen, dass andere Fahrzeuge weiter bearbeitet werden konnten. Das Gewicht für diesen erfindungsgemäßen passiven Brandschutz war um ca. 50 % gegenüber üblichen Lösungen reduziert, der Arbeitsaufwand auf ca. 30 %.

Erfindungsgemäß lassen sich die o. g. Speiser/Speisereinsätze mit der erfindungsgemäßen Paste herstellen, nämlich durch das so genannte "Kernschießen". Dabei wird die Paste mit Pressluft explosionsartig bei 3 bis 6 bar in eine zweiteilige Form "geschossen". Die erfindungsgemäße Paste ist für dieses Formgebungsverfahren sehr gut geeignet. Das daraus hergestellte feuchte Formteil ist ausreichend stabil, um an der Luft oder bei erhöhter Temperatur zu trocknen und damit auszuhärten. Besonders vorteilhaft ist es hier, wenn Mikrohohlkugeln mit unterschiedlichen Schmelzbereichen eingesetzt werden. Beim Erhitzen des Formteils bilden sich dann nämlich Mikrohohlräume im Formteil, die dem noch festen Material die Möglichkeit zur Ausdehnung geben, so dass eine Rissbildung durch thermische Ausdehnung vermieden wird.

### Beispiel 6:

Die aus der erfindungsgemäßen Paste hergestellten Speiser hatten eine Dichte von etwa 0,1 bis 0,4 g/cm³ und nur einen sehr geringen organischen Anteil. Zur Aushärtung wurde das feuchte, durch Kernschießen hergestellte Formteil bei 200 °C über eine Zeitdauer von 2 Stunden getrocknet, wobei bei Einsatz von Katalysatoren auch eine Härtung bei Temperaturen unterhalb von 100 °C möglich ist. Die Stabilitätskriterien nach den Brandschutznormen wurden erfüllt. Die Speiser waren im praktischen Test nach dem Gießvorgang geruchs- und qualmfrei. Das Formteil stellte sich außerdem als nicht hygroskopisch heraus. Er zeigte ein sehr gutes Wärmedämmverhalten, welches dem der besten bisher bekannten Speiser entspricht. Bei einem Stabilitätstest bei 740 °C mit einer AlSi₁₂- Legierung wurde keine thermische Beanspruchung, sondern nur eine leichte oberflächliche Verfärbung des vorher hellgrauen Materials festgestellt.

Zur Überprüfung der Brandschutzwirkung von plattenförmigen Formteilen, die aus der erfindungsgemäßen Paste hergestellt worden sind, mussten diese Platten eine Stunde lange auf einer 1400 °C heißen Oberfläche liegen. Obwohl das Material auf der heißen Oberfläche versinterte, blieb die Isolationswirkung erhalten.

Wesentlich in der Erfindung ist der hohe Gehalt an mineralischen Mikrohohlkugeln in Kombination mit einem Polyoiloxan als Bindernittel und mit Fasern in einer frei formbaren aushärtbaren Paste und in dem aus der Paste hergestellten Formteil. Durch die Kombination dieser Bestandteile werden kostengünstig eine Vielzahl von Vorteilen erreicht, wie freie Formbarkeit, einfache Herstellbarkeit der festen Körper aus der Paste, Stabilität bei hohen Temperaturen ohne Rissbildung, Eigenstabilität auch der Paste, niedrige Rohdichte und andere Vorteile.

Die Paste besteht zu mindestens 50 Gew.-% und das daraus hergestellte Formteil zu mindestens 80 bis 90 Gew.-% aus den Mikrohohlkugeln, die damit sowohl in der Paste als auch im Formteil den Hauptbestandteil bilden. Das Formteil besteht daher fast nur aus Mikrohohlkugeln. Im Stand der Technik dagegen werden die Mikrohohlkugeln nur als ein Zusatzbestandteil mit einem kleinen Gewichtsanteil zu bestehenden Rezepturen eingesetzt.

Die Paste und die Formkörper gemäß der Erfindung können eingesetzt werden in den Branchen
Hochbau, Tunnelbau, Schiffsbau, Fahrzeugbau, Schienenfahrzeugbau, Gießerei, Industrie, Technik
und finden Anwendungen als
Kabel-/Rohrabschottungen, Rohrschalen für Heizung, Abgasrohr, etc.; Fugenabdichtungen, Verschließungen von Löchern und Rissen in Wänden und Decken, Brandschutzkanäle, Brandschutzbeschichtungen, Feuerschutzklappen, Feuerschutztüren, Speiser für Gießereitechnik, Beschichtungen für Auspuffanlagen, für Elektrogeräte, für Heizgeräte, für Motoren, für Öfen, für Grillgeräte; Isolierung/Reparatur von Kaminen; Isolierung von Steckdosen, Deckenleuchten, Schaltern, Sicherungskästen; Isolierung von Industrieofenanlagen, Feuerungsanlagen; Isolierung von Haushaltsgeräten (Mikrowelle, Cerankochfeld, Backofen); Bodenbeläge, Wand- und Deckenbeschichtungen/Verkleidungen/Innenausbau, Isolierung von Fußböden an Schienenfahrzeugen oder allgemein; Formteil-Platten für Brandschutzklappen, Türen, Schotten; Spritzputz an Stahlbetonkontruktionen; Plattenbekleidungen, Spritzputzbekleidungen und vieles andere mehr.

## Patentansprüche

1. Frei formbare aushärtbare Paste, enthaltend kleine mineralische Mikrohohlkugeln, Wasser, ein Bindemittel und einen Gehalt an Fasern,
**dadurch gekennzeichnet,**
**dass** als Bindemittel Polysiloxan und besonders bevorzugt eine Polysiloxanemulsion eingesetzt wird,
**dass** die Paste ein Netzmittel enthält und
**dass** sie einen Entschäumer enthält.

2. Paste nach Anspruch 1,
**dadurch gekennzeichnet,**
**dass** die durchschnittliche Korngröße (Durchmesser) der Mikrohohlkugeln bei 5 µm bis 500 µm und vorzugsweise bei 20 µm bis 300 µm und besonders bevorzugt bei 50 µm bis 150 µm liegt.

3. Paste nach Anspruch 1,
**dadurch gekennzeichnet,**
**dass** die Mikrohohlkugeln aus Glas, Keramik oder Flugasche bestehen und insbesondere ein Inertgas einschließen.

4. Paste nach Anspruch 1,
**dadurch gekennzeichnet,**
**dass** die Paste ein Gemisch von Mikrohohlkugeln mit unterschiedlich hohen Schmelzpunkten enthält.

5. Paste nach Anspruch 1,
**dadurch gekennzeichnet,**
**dass** eine einheitliche Art von Fasern oder ein Gemisch unterschiedlicher Fasern, vorzugsweise mineralischer Fasern, eingesetzt sind, insbesondere Glasfasern, Glaswolle, Steinwolle, keramische Fasern, Kohlenstofffasern und/oder Aramidfasern.

6. Paste nach Anspruch 1,
**gekennzeichnet durch**
die folgende Zusammensetzung
Mikrohohlkugeln: 10 - 80 Gew.-%, vorzugsweise 30 - 75 Gew.-%
Fasern: 3 - 20 Gew.-%
Bindemittel: 3 - 25 Gew.-% (Wirkstoff)
Netzmittel: 0,01 - 1 Gew.-%
Entschäumer: 0,01 - 2 Gew.-%
Rest: Wasser.

7. Verwendung der Paste nach Anspruch 1 zum Brandschutz und/oder zur Wärmedämmung, insbesondere als Spachtelmasse oder spritzfähiges oder streichfähiges Material zum Abdichten von Hohlräumen, zum Verspachteln von Wandflächen oder Anspritzen an Wandflächen und/oder zur Isolierung von schwer zugänglichen oder unsymmetrischen Stellen im Maschinenbau und/oder zur Wärmedämmung und Brandabschottung bei Durchführungsöffnungen in Brandschutzwänden wie Rohr- und Kabeldurchführungen.

8. Verwendung der Paste nach Anspruch 1 als frei formbares Material zur Herstellung von Formteilen für erhöhte Anwendungsgrenztemperaturen, insbesondere im Kernschieß-Verfahren, durch freie Modellierung und durch Pressen.

9. Formteil für erhöhte Anwendungsgrenztemperaturen, enthaltend mineralische Mikrohohlkugeln, Wasser, Fasern und als Bindemittel Polysiloxan,
**dadurch gekennzeichnet,**
**dass** es durch Formgebung und Aushärten einer Paste nach einem der Ansprüche 1 bis 6 hergestellt worden ist.

10. Formteil nach Anspruch 9,
**dadurch gekennzeichnet,**
**dass** es ausgebildet ist als eine Dämmschicht für erhöhte Anwendungsgrenztemperaturen, insbesondere in Plattenform für Brandschutztüren und Brandschutzwände im Hoch- und Schiffsbau, für technische Dämmung, für die selektive Dämmung von elektrischen Schaltern, Steckdosen, Lampen und dergleichen, für Einsatzgebiete mit schockartigen Temperaturänderungen, insbesondere in der Gießereitechnik, als Innenauskleidung für Hochtemperaturöfen.

11. Formteil nach Anspruch 9,
**dadurch gekennzeichnet,**
**dass** dessen Dichte bei 50 kg/m³ bis 500 kg/m³, insbesondere bei 100 kg/m³ bis 250 kg/m³ liegt.

12. Formteil nach Anspruch 9,
**dadurch gekennzeichnet,**
**dass** im ausgehärteten Formteil mehr als 80 Gew.-%, insbesondere etwa 90 Gew.-%, Mikrohohlkugeln enthalten sind.

13. Formteil nach Anspruch 9,
**dadurch gekennzeichnet,**
**dass** es als ein Formteil für den Metallguss, insbesondere als Speisereinsatz ausgebildet ist.

## Claims

1. Freely shapeable curable paste containing small mineral hollow microspheres, water, a binder and a content of fibres, **characterised in that** polysiloxane and particularly preferably a polysiloxane emulsion, is used as a binder, **in that** the paste contains a wetting agent, and **in that** it contains an antifoaming agent.

2. Paste according to claim 1, **characterised in that** the average grain size (diameter) of the hollow microspheres is of from 5 µm to 500 µm and preferably of from 20 µm to 300 µm and particularly preferably of from 50 µm to 150 µm.

3. Paste according to claim 1, **characterised in that** the hollow microspheres consist of glass, ceramics or fly ash and more particularly include an inert gas.

4. Paste according to claim 1, **characterised in that** the paste contains a mixture of hollow microspheres having different melting points.

5. Paste according to claim 1, **characterised in that** a uniform type of fibres or a mixture of different fibres, preferably mineral fibres, is used, more particularly glass fibres, glass wool, mineral wool, ceramic fibres, carbon fibres and/or aramid fibres.

6. Paste according to claim 1, **characterised by** the following composition:
hollow microspheres: 10 - 80 % by weight, preferably 30 - 75 % by weight,
fibres: 3 - 20 % by weight,
binders: 3 - 25 % by weight (active agent),
wetting agents: 0.01 - 1 % by weight,
antifoaming agents: 0.01 - 2 % by weight,
remainder: water.

7. Use of the paste according to claim 1 for fire protection and/or for thermal insulation, more particularly as a filling compound or a sprayable or spreadable material for the sealing of hollow chambers, for the filling of wall surfaces or for spraying on wall surfaces and/or in machine construction for the insulation of places that are difficult to access or asymmetrical and/or for the thermal insulation and fire-resistant sealing of inlet openings in fire walls, such as pipe and cable inlets.

8. Use of the paste according to claim 1 as a freely shapeable material for the production of shaped parts for elevated application threshold temperatures, more particularly in the core-shooting process, by free forming and pressing.

9. Shaped part for elevated application threshold temperatures, containing hollow microspheres, water, fibres and polysiloxane as a binder, **characterised in that** it has been produced by shaping and curing a paste according to any of claims 1 to 6.

10. Shaped part according to claim 9, **characterised in that** it is formed as an insulating layer for elevated application threshold temperatures, more particularly in the form of boards for fire doors and fire walls in building construction and ship building, for technical insulation, for the selective insulation of electric switches, power sockets, lamps and the like, for fields of application having abrupt temperature changes, more particularly in foundry technology as an inner lining for high-temperature furnaces.

11. Shaped part according to claim 9, **characterised in that** the density thereof is of from 50 kg/m³ to 500 kg/m³, more particularly of from 100 kg/m³ to 250 kg/m³.

12. Shaped part according to claim 9, **characterised in that** the cured shaped part contains more than 80 % by weight, more particularly approximately 90 % by weight, of hollow microspheres.

13. Shaped part according to claim 9, **characterised in that** it is designed as a shaped part for founding, more particularly as a feeder sleeve.

## Revendications

1. Pâte durcissable librement façonnable, contenant de petites microbilles creuses minérales, de l'eau, un liant et une teneur en fibres,
**caractérisée en ce que**,
comme liant, on utilise du polysiloxane et de façon particulièrement préférée, une émulsion de polysiloxane,
**en ce que** la pâte contient un agent mouillant et
**en ce qu'**elle contient un agent antimoussant.

2. Pâte selon la revendication 1,
**caractérisée en ce que**
la taille de grains moyenne (diamètre) des microbilles creuses est de 5 µm à 500 µm, et de préférence de 20 µm à 300 µm, et de façon particulièrement préférée de 50 µm à 150 µm.

3. Pâte selon la revendication 1,
**caractérisée en ce que**
les microbilles creuses sont constituées de verre, de céramique ou de cendres volantes et recèlent en particulier un gaz inerte.

4. Pâte selon la revendication 1,
**caractérisée en ce que**
la pâte contient un mélange de microbilles creuses ayant des points de fusion de valeurs différentes.

5. Pâte selon la revendication 1,
**caractérisée en ce**
**qu'**il est utilisé une espèce uniforme de fibres ou un mélange de différentes fibres, de préférence des fibres minérales, en particulier des fibres de verre, de la laine de verre, de la laine de roche, des fibres céramiques, des fibres de carbone et/ou des fibres d'aramide.

6. Pâte selon la revendication 1,
**caractérisée par**
la composition suivante :
Microbilles creuses : 10 à 80 % en poids, de préférence 30 à 75 % en poids
Fibres : 3 à 20 % en poids
Liants : 3 à 25 % en poids (matière active)
Agent mouillant : 0,01 à 1 % en poids
Agent antimoussant : 0,01 à 2 % en poids
Reste : eau

7. Utilisation de la pâte selon la revendication 1 pour la protection anti-incendie et/ou pour l'isolation thermique, en particulier en tant que mastic ou matériau pulvérisable ou brossable pour l'étanchéification de cavités, pour l'enduction de surfaces de paroi et/ou pour l'injection sur des surfaces de paroi et/ou pour l'isolation d'emplacements difficilement accessibles ou asymétriques dans la construction mécanique et/ou pour l'isolation thermique et le cloisonnement pare-feu au niveau d'ouvertures de traversée dans des parois coupe-feu telles que des passages de tubes et de câbles.

8. Utilisation de la pâte selon la revendication 1 en tant que matériau librement façonnable pour la fabrication de pièces moulées destinées à des températures limites d'utilisation accrues, en particulier dans le procédé de tirage de sable, par modélisation libre et par pressage.

9. Pièce moulée pour températures limites d'utilisation accrues, contenant des microbilles creuses minérales, de l'eau, des fibres et du polysiloxane en tant que liant,
**caractérisée en ce**
**qu'**elle a été fabriquée par façonnage et durcissement d'une pâte selon l'une des revendications 1 à 6.

10. Pièce moulée selon la revendication 9,
**caractérisée en ce**
**qu'**elle est constituée en tant que couche isolante pour des températures limites d'utilisation accrues, en particulier sous forme de plaque pour des portes coupe-feu et des parois coupe-feu dans la construction de bâtiments et de navires, pour l'isolation technique, pour l'isolation sélective de commutateurs électriques, de prises, de lampes et similaires, pour des secteurs d'utilisation avec des variations brusques de température, en particulier dans la technique de fonderie, en tant que revêtement intérieur pour des fours à haute température.

11. Pièce moulée selon la revendication 9,
**caractérisée en ce que**
sa densité est de 50 kg/m³ à 500 kg/m³, en particulier de 100 kg/m³ à 250 kg/m³.

12. Pièce moulée selon la revendication 9,
**caractérisée en ce que**
la pièce moulée durcie contient plus de 80 % en poids, en particulier environ 90 % en poids, de microbilles creuses.

13. Pièce moulée selon la revendication 9,
**caractérisée en ce**
**qu'**elle est constituée en tant que pièce moulée pour la fonte de métaux, en particulier en tant que manchon pour masselottes.
